(19) Europäisches Patentamt
European Patent Office
Office européen des brevets

(11) EP 1 707 002 B1

(12) **EUROPEAN PATENT SPECIFICATION**

(45) Date of publication and mention of the grant of the patent:
**07.01.2009 Bulletin 2009/02**

(21) Application number: **04797609.7**

(22) Date of filing: **04.11.2004**

(51) Int Cl.:
***H04N 7/01*** *(2006.01)*

(86) International application number:
**PCT/EP2004/012483**

(87) International publication number:
**WO 2005/071956 (04.08.2005 Gazette 2005/31)**

(54) **METHOD AND APPARATUS FOR CONTROLLING THE INSERTION OF ADDITIONAL FIELDS OR FRAMES INTO A FIRST FORMAT PICTURE SEQUENCE IN ORDER TO CONSTRUCT THEREFROM A SECOND FORMAT PICTURE SEQUENCE**

VERFAHREN UND VORRICHTUNG ZUR STEUERUNG DES EINFÜGENS ZUSÄTZLICHER FELDER ODER EINZELBILDER IN EINE BILDSEQUENZ EINES ERSTEN FORMATS, UM DARAUS EINE BILDSEQUENZ EINES ZWEITEN FORMATS ZU KONSTRUIEREN

PROCEDE ET APPAREIL PERMETTANT DE COMMANDER L'INSERTION DE TRAMES OU D'IMAGES ADDITIONNELLES DANS UNE SEQUENCE D'IMAGES POUR EN CHANGER LE FORMAT

(84) Designated Contracting States:
**DE FR GB**

(30) Priority: **21.01.2004 EP 04090021**

(43) Date of publication of application:
**04.10.2006 Bulletin 2006/40**

(73) Proprietor: **Thomson Licensing**
**92100 Boulogne-Billancourt (FR)**

(72) Inventors:
- **HERPEL, Carsten**
  **30974 Wennigsen (DE)**
- **KEESEN, Heinz, Werner**
  **30173 Hannover (DE)**
- **SCHEWZOW, Andrej**
  **30163 Hannover (DE)**
- **WINTER, Marco**
  **30659 Hannover (DE)**

(74) Representative: **Hartnack, Wolfgang**
**Deutsche Thomson OHG**
**European Patent Operations**
**Karl-Wiechert-Allee 74**
**30625 Hannover (DE)**

(56) References cited:
**WO-A-99/52281** **US-A1- 2002 047 937**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 707 002 B1

## Description

The invention relates to a method and to an apparatus for controlling the insertion of additional fields or frames into a first format picture sequence having e.g. 24 progressive frames per second in order to construct therefrom a second format picture sequence having e.g. 25 frames per second.

### Background

The major TV systems in the world use interlaced scanning and either 50Hz field frequency (e.g. in Europe and China for PAL and SECAM) or 60Hz or nearly 60Hz field frequency (e.g. in USA and Japan for NTSC), denoted 50i and 60i, respectively. However, movies are produced in 24Hz frame frequency and progressive scanning, denoted 24p, which value when expressed in interlace format would correspond to 48i.

At present, conversion of 24p movie to 60Hz interlaced display is handled by '3:2 pull-down' as shown in Fig. 2, in which 3:2 pull-down one field is inserted by field repetition every five fields. Interlaced fields ILF are derived from original film frames ORGFF. From a first original film frame OFR1 three output fields OF1 to OF3 are generated, and from a third original film frame OFR3 three output fields OF6 to OF8 are generated. From a second original film frame OFR2 two output fields OF4 and OF5 are generated, and from a fourth original film frame OFR4 two output fields OF9 and OF10 are generated, and so on.

It is desirable that distribution media do have a single-format video and audio track which are playable worldwide rather than the current situation where at least a 50Hz and a 60Hz version exist of each packaged media title, e.g. DVD. Because many sources consist of 24 fps (frames per second) film, this 24p format is preferably the desired format for such single-format video tracks, which format therefore needs to be adapted at play-back time for displaying correctly on display devices, both, in the 50Hz and in the 60Hz countries.

The following solutions are known for 24p to 25p or 50i conversion or, more general, to 25 fps conversion:

- Replaying 4.2% faster: this changes the content length and requires expensive real-time audio pitch conversion and is therefore not applicable for consumer products. It is true that current movie broadcast and DVD do apply this solution for video, but the required audio speed or pitch conversion is already dealt with at the content provider's side so that at consumer's side no audio pitch conversion is required. DVD Video discs sold in 50Hz countries contain audio data streams that are already encoded such that the DVD player's decoder automatically outputs the correct speed or pitch of the audio signal.
- Applying a regular field/frame duplication scheme: this solution leads to unacceptable regular motion judder and, hence, is not applied in practise.
- Applying motion compensated frame rate conversion: this is a generic solution to such conversion problems which is very expensive and, hence, is not applicable for consumer products.

WO 99/52281 A discloses field rate conversion in which a number of video fields is inserted into the source field sequence. In order to reduce visible motion judder, the best motion conditions are detected which occur either when the image motion is high or low.

### Invention

At present, conversion of original 24p format movie video and audio data streams to 50Hz interlaced display is carried out by replaying the movie about 4% faster. This means, however, that in 50Hz countries the artistic content of the movie (its duration, pitch of voices) is modified. Field/frame repetition schemes similar to 3:2 pull-down are not used since they show unacceptable motion judder artefacts when applied in a regular manner, such as inserting one extra field every 12 frames.

A problem to be solved by the invention is to provide a field or frame insertion scheme for conversion from 24p format to 25 fps format in an improved manner thereby minimising motion judder artefacts. This problem is solved by the method disclosed in claim 1. An apparatus that utilises this method is disclosed in claim 2.

The characteristics of a current movie scene such as global motion, brightness/intensity level and scene change locations are evaluated in order to apply duplicated or repeated frames/fields at subjectively non-annoying locations. In other words, the invention uses relatively easily available information about the source material to be converted from 24p to 25 fps for adaptively inserting repeated fields/frames at non-equidistant locations where the resulting insertion artefacts are minimum.

Advantageously, the invention can be used for all frame rate conversion problems where there is a small difference between source frame rate and destination frame rate. If these frame rates differ a lot, such as in 24 fps to 30 fps conversion, there is hardly any freedom left for shifting in time fields or frames to be repeated.

The invention facilitates computationally inexpensive conversion from 24 fps to 25 fps format picture sequences (example values) with minimised motion judder.

In principle, the inventive method is suited for controlling the insertion of additional fields or frames into a first format picture sequence in order to construct therefrom a second format picture sequence the frame frequency of which is constant and is greater than that of the first format picture sequence, the method including the steps:

- determining locations of fields or frames in said first format picture sequence at which locations the insertion of a corresponding additional field or frame causes a minimum visible motion judder in said second format picture sequence;
- inserting in said first format picture sequence a field or a frame at some of said locations at non-regular field or frame insertion distances such that in total the average distance between any adjacent frames corresponds to that of said second format picture sequence;
- presenting said first format picture sequence together with said non-regularly inserted fields and/or frames in the format of said second format picture sequence.

In principle the inventive apparatus is suited for controlling the insertion of additional fields or frames into a first format picture sequence in order to construct therefrom a second format picture sequence the frame frequency of which is constant and is greater than that of the first format picture sequence, said apparatus including means that are adapted for determining locations of fields or frames in said first format picture sequence at which locations the insertion of a corresponding additional field or frame causes a minimum visible motion judder in said second format picture sequence, and for inserting in said first format picture sequence a field or a frame at some of said locations at non-regular field or frame insertion distances such that in total the average distance between any adjacent frames corresponds to that of said second format picture sequence,
and for presenting said first format picture sequence together with said non-regularly inserted fields and/or frames in the format of said second format picture sequence.

Advantageous additional embodiments of the invention are disclosed in the respective dependent claims.

## Drawings

Exemplary embodiments of the invention are described with reference to the accompanying drawings, which show in:

| | |
|---|---|
| Fig. 1 | Simplified block diagram of an inventive disc player; |
| Fig. 2 | Application of 3:2 pull-down on a 24p source picture sequence to provide a 60i picture sequence; |
| Fig. 3 | Regular pattern of repeated frames; |
| Fig. 4 | Regular pattern of repeated fields; |
| Fig. 5 | Time line for regular frame repetition according to Fig. 3; |
| Fig. 6 | Example motion judder tolerance values of a video sequence; |
| Fig. 7 | Example irregular temporal locations for field or frame repetition and the resulting varying presentation delay; |
| Fig. 8 | Frame or field repetition distance expressed as a function of video delay and motion judder tolerance; |
| Fig. 9 | The frame or field repetition distance function of Fig. 8 whereby the maximum and minimum video delays depend on the required degree of lip-sync; |
| Fig. 10 | 24 fps format frames including a repeated frame without motion compensation; |
| Fig. 11 | 25 fps format frame output related to Fig. 10; |
| Fig. 12 | 24 fps format frames including a repeated frame with motion compensation; |
| Fig. 13 | 25 fps format frame output related to Fig. 12. |

## Exemplary embodiments

In Fig. 1 a disk drive including a pick-up and an error correction stage PEC reads a 24p format encoded video and audio signal from a disc D. The output signal passes through a track buffer and de-multiplexer stage TBM to a video decoder VDEC and an audio decoder ADEC, respectively. A controller CTRL can control PEC, TBM, VDEC and ADEC. A user interface UI and/or an interface IF between a TV receiver or a display (not depicted) and the disc player are used to switch the player output to either 24 fps mode or 25 fps mode. The interface IF may check automatically which mode or modes the TV receiver or a display can process and present. The replay mode information is derived automatically from feature data (i.e. data about which display mode is available in the TV receiver or the display) received by interface IF that is connected by wire, by radio waves or optically to the TV receiver or the display device. The feature data can be received regularly by said interface IF, or upon sending a corresponding request to said TV receiver or a display device. As an alternative, the replay mode information is input by the user interface UI upon displaying a corresponding request for a user. In case of 25 fps output from the video decoder VDEC the controller CTRL, or the video decoder VDEC itself, determines from characteristics of the decoded video signal at which temporal locations a field or a frame is to be repeated by the video decoder. In some embodiments of the invention these temporal locations are also controlled by the audio signal or signals coming from audio decoder ADEC as explained below.
Instead of a disc player, the invention can also be used in other types of devices, e.g. a digital settop box or a digital TV receiver, in which case the front-end including the disk drive and the track buffer is replaced by a tuner for digital signals.
Fig. 3 shows a regular pattern of repeated frames wherein one frame is repeated every 24 frames, i.e. at $t_n$, $t_n$+1, $t_n$+2, $t_n$+3, etc. seconds, for achieving a known 24p to 25 fps conversion.
Fig. 4 shows a regular pattern of repeated fields wherein one field is repeated every 24 fields, i.e. at $t_n$, $t_n$+0.5, $t_n$+1, $t_n$+1.5, $t_n$+2, etc. seconds, for achieving a known 24p to 25 fps conversion. This kind of processing is applicable if the display device has an interlaced output. The number of locations on the time axis where judder occurs are doubled, but the intensity of each 'judder instance' is halved as compared to the frame repeat. Top fields are derived from the first, third, fifth, etc. line of the indicated frame of the source sequence and bottom fields are derived from the second, fourth, sixth, etc. line of the indicated frame of the source sequence.
Fig. 5 shows a time line for regular frame repetition according to Fig. 3, with markers at the temporal locations $t_n$, $t_n$+1, $t_n$+2, $t_n$+3, etc. seconds where frame repetition occurs.
For carrying out the inventive adaptive insertion of repeated fields or frames at non-equidistant (or irregular) locations corresponding control information is required. Content information and picture signal characteristics about the source material become available as soon as the picture sequence is compressed by a scheme such as MPEG-2 Video, MPEG-4 Video or MPEG-4 Video part 10, which supposedly will be used not only for current generation broadcast and packaged media such as DVD but also for future media such as disks based on blue laser technology.
Picture signal characteristics or information that is useful in the context of this invention are:

- the motion vectors generated and/or transmitted,
- scene change information generated by an encoder,
- average brightness or intensity information, which can be derived from analysing DC transform coefficients,
- average texture strength information, which can be derived from analysing AC transform coefficients.

Such picture signal characteristics can be transferred from the encoder via a disk or via broadcast to the decoder as MPEG user data or private data. Alternatively, the video decoder can collect or calculate and provide such information.
In order to exploit motion vector information, the set of motion vectors MV for each frame is collected and processed such that it can be determined whether a current frame has large visibly moving areas, since such areas suffer most from motion judder when duplicating frames or fields. To determine the presence of such areas the average absolute vector length AvgMVi can be calculated for a frame as an indication for a panning motion:

$$AvgMV_i = \frac{1}{VX \cdot VY} \sum_{x=0}^{VX-1} \sum_{y=0}^{VY-1} \left| MV_{x,y} \right| , \qquad (1)$$

with 'i' denoting the frame number, 'VX' and 'VY' being the number of motion vectors in x (horizontal) and y (vertical) direction of the image. Therefore, VX and VY are typically obtained by dividing the image size in the respective direction by the block size for motion estimation.
If motion vectors within one frame point to different reference frames at different temporal distance to the current frame, a normalising factor RDistx,y for this distance is required in addition:

$$AvgMV_i = \frac{1}{VX \cdot VY} \sum_{x=0}^{VX-1} \sum_{y=0}^{VY-1} \frac{\left| MV_{x,y} \right|}{RDist_{x,y}} . \qquad (2)$$

In another embodiment using more complex processing, a motion segmentation of each image is calculated, i.e. one or more clusters of adjacent blocks having motion vectors with similar length and direction are determined, in order to detect multiple large-enough moving areas with different motion directions. In such case the average motion vector can be calculated for example by:

$$AvgMV_i = \frac{\sum_{c=1}^{nClusters} AvgMV_c \cdot ClusterSize_c}{\sum_{c=1}^{nClusters} ClusterSize_c} , \quad (2a)$$

wherein AvgMVc is the average motion vector length for the identified cluster 'c'.
Advantageously this approach eliminates the effect of motion vectors for randomly moving small objects within an image that are not member of any identified block cluster motion and that do not contribute significantly to motion judder visibility. The processing may take into account as weighting factors for $AvgMV_i$ whether the moving areas are strongly textured or have sharp edges, as this also increases visibility of motion judder. Information about texture strength can be derived most conveniently from a statistical analysis of transmitted or received or replayed AC transform coefficients for the prediction error. In principle, texture strength should be determined from analysing an original image block, however, in many cases such strongly textured blocks after encoding using motion compensated prediction will also have more prediction error energy in their AC coefficients than less textured blocks. The motion judder tolerance MJT at a specific temporal location of the video sequence can, hence, be expressed as:

$$MJT = f(AvgMV, texture\ strength, edge\ strength) \quad (3)$$

with the following general characteristics:

- Given fixed values of texture strength and edge strength, MJT is proportional to 1/AvgMV;
- Given fixed values of AvgMV and edge strength, MJT is proportional to 1/(texture strength);
- Given fixed values of AvgMV and texture strength, MJT is proportional to 1/(edge strength).

Fig. 6 shows example motion judder tolerance values MJT(t) over a source sequence.
Preferably the current size of the motion judder tolerance value influences the distribution, as depicted in Fig. 7a, of inserted repeated frames or fields into the resulting 25 fps sequence, i.e. the frame or field repetition distance FRD. Early or delayed insertion of repeated frames causes a negative or positive delay of the audio track relative to the video track as indicated in Fig. 7b, i.e. a varying presentation delay for video. A maximum tolerable video delay relative to audio in both directions is considered when applying the mapping from motion judder tolerance MJT to frame or field repetition distance FRD.
One possible solution for this control problem is depicted in Fig. 8. The frame or field repetition distance FRD is expressed as a function of the video delay VD and the motion judder tolerance MJT:

$$FRD = f(VD, MJT) , \quad (4)$$

with the following general characteristics:

- Given a fixed value of VD, FRD is proportional to 1/MJT;
- Given a fixed value of MJT, FRD is proportional to 1/VD;

This relation can be expressed in a characteristic of FRD = f(VD) that changes depending on the motion judder tolerance value, as is the case in Fig. 8, favouring longer than optimum gaps between inserted repeated frames in case of low motion judder tolerance (e.g. high degree of motion) and favouring shorter than optimum gaps in case of high motion judder tolerance (e.g. lower-than-average degree of motion).
The optimum field or frame repetition distance is shown as $FRD_{opt}$. The maximum allowable video delay is shown as VDmax.
The maximum allowable video delay in negative direction is shown as VDmin.
Since a short freeze-frame effect at scene change locations is not considered as being annoying, scene change information generated by a video encoder (or by a video decoder) can be used to insert one or more repeated fields or frames at such locations, the number of repetitions depending on the current degree of video delay. For the same reason, repeated fields or frames can be inserted after a fade-to-black sequence, a fade-to-white sequence or a fade to any colour. All such singular locations have a very high MJT value.
Notably repeated frames could be used at such locations even if at other picture content fields only would be repeated in order to reduce motion judder intensity at individual locations. Generally, repeated frames and repeated fields may co-exist in a converted picture sequence.

Typically accepted delay bounds for perceived lip-sync need only be observed if at least one speaker is actually visible within the scene. Hence, the delay between audio and video presentation can become larger than the above-mentioned bounds while no speaker is visible. This is typically the case during fast motion scenes. Hence an additional control can be carried out as shown in Fig. 9, in that the video delay bounds $VD_{min}$ and $VD_{max}$ are switched or smoothly transitioned between:

- lip-sync-acceptable values $VD_{minLipSync}$ and $VD_{maxLipSync}$ if speech or short sound peaks (which are caused by special events like a clapping door) are detected and a slowly moving or static scene is detected;
- larger VD values $VD_{min}$ and $VD_{max}$ otherwise.

A detection of speech can be derived for example in case of the mostly-used multi-channel audio by evaluating the centre channel relative to left and right channels, as speech in movies is mostly coded into the centre channel. If the centre channel shows a bursty energy distribution over time that is significantly different from the energy distribution in the left and right channels, then the likelihood of speech being present is high.

All the above controls for adaptively determining the local frame repetition distance do work for a single-pass through the video sequence. However, the inventive control benefits from a two-pass encoding processing as is carried out in many professional MPEG-2 encoders. In that case the first pass is used to collect the motion intensity curve, scene cut locations and count, number, location and length of scenes which require tight lip-sync, black frames, etc. Then a modified control scheme can be applied that does not only take into account available information for the currently processed frame and its past, but also for a neighbourhood of past and future frames:

$$FRD(i) = f(VD, MJT(i-k) \ldots MJT(i+k)) , \qquad (5)$$

wherein 'i' denotes the current frame number and 'k' denotes a running number referencing the adjacent frames. A general characteristic of each such function is that FRD increases if MJT(i) is smaller than the surrounding MJT values and decreases if MJT(i) is larger than the surrounding MJT values. Related picture signal characteristics can be transferred as MPEG user data or private data from the encoder via a disk or via broadcast signal to the decoder.

In another embodiment of the invention, under specific circumstances motion compensated interpolation of frames rather than repetition of frames can be applied without computational expense. Such motion compensated interpolation can make use of the transmitted motion vectors for the current frame. In general, these motion vectors are not suitable for motion compensated frame interpolation since they are optimised for optimum prediction gain rather than indicating the true motion of a scene. However, if a decoder analysis of received motion vectors shows that a homogeneous panning of the scene occurs, a highly accurate frame can be interpolated between the current and the previous frame. Panning means that all motion vectors within a frame are identical or nearly identical in length and orientation. Hence an interpolated frame can be generated by translating the previous frame by half the distance indicated by the average motion vector for the current frame. It is assumed that the previous frame is the reference frame for the motion compensated prediction of the current frame and that the interpolated frame is equidistantly positioned between the previous and current frame. If the prediction frame is not the previous frame, adequate scaling of the average motion vector is to be applied.
The corresponding considerations are true for the case where a zoom can be determined from the received motion vectors. A zoom is characterised by zero motion vectors in the zoom centre and increasing length of centre-(opposite)-directed motion vectors around this zoom centre, the motion vector length increasing in relation to the distance from the zoom centre.

Advantageously this kind of motion compensated interpolation yields an improved motion judder behaviour compared to repeating a frame, as is illustrated in Fig. 10 to 13. Fig. 10 in 24 fps format and Fig. 11 after 25 fps format conversion show frames (indicated as vertical bars) with a motion trajectory for a vertically moving object and one instance of frame repetition, which results in a 'freeze frame'. Fig. 12 shows insertion of a motion interpolated frame which, when presented at the increased 25 fps target frame rate as depicted in Fig. 13, leads to a 'slowly moving frame' rather than a 'freeze frame'.

The above-disclosed controls for frame and/or field repetition and interpolation for frame rate conversion can be applied, both, at the encoder and at the decoder side of an MPEG-2 (or similar) compression system since most side information is available at both sides, possibly except reliable scene change indication.
However, in order to exploit the superior picture sequence characteristics knowledge of the encoder, the locations for fields or frames to be repeated or interpolated can be conveyed in the (MPEG-2 or otherwise) compressed 24 fps video signal. Flags to indicate temporal order of fields (top_field_first) and repetition of the first field for display (repeat_first_field) exist already in the MPEG-2 syntax. If it is required to signal the conversion pattern both for 24 fps to 30 fps and 24 fps to 25 fps conversion for the same video signal, one of the two series of flags may be conveyed in a suitable user data field for each picture.

The values 24 fps and 25 fps and the other numbers mentioned above are example values which can be adapted correspondingly to other applications of the invention.
The invention can be applied for:

- packaged media (DVD, blue laser discs, etc.),
- downloaded media including video-on-demand, near video-on-demand, etc.,
- broadcast media.

The invention can be applied in an optical disc player or in an optical disc recorder, or in a harddisk recorder, e.g. an HDD recorder or a PC, or in a settop box, or in a TV receiver.

## Claims

**1.** Method for controlling (CTRL, VDEC) the insertion of additional fields or frames into a first format (24p) picture sequence having a first frame frequency in order to construct therefrom a second format (25fps) picture sequence the frame frequency of which is constant and is greater than said first frame frequency, said method including the steps:

- determining (CTRL, VDEC, ADEC) locations of fields or frames in said first format picture sequence at which locations the insertion of a corresponding additional field or frame causes a minimum visible motion judder (MJT) in said second format picture sequence;
- inserting (CTRL, VDEC) in said first format picture sequence a field or a frame at some of said locations at non-regular field or frame insertion distances (FRD) such that in total the average distance between any adjacent frames corresponds to that of said second format picture sequence;
- presenting said first format picture sequence together with said non-regularly inserted fields and/or frames in the format of said second format picture sequence,

**characterised in that** a maximum amount of presentation delay ($VD_{max}$, $VD_{min}$) of the video track relative to the audio track is determined and that said field or frame insertion locations in said first format picture sequence are controlled such that, in order to gain perceived lip-sync, in said second format picture sequence a smaller maximum amount of presentation delay ($VD_{maxLipSync}$, $VD_{minLipSync}$) of the video track relative to the audio track caused by the insertion irregularity is used in case the following conditions are met:
- a slowly moving or static scene is detected, and
- speech or short sound peaks are detected in the audio information assigned to said first format picture sequence.

**2.** Apparatus for controlling (CTRL, VDEC) the insertion of additional fields or frames into a first format (24p) picture sequence having a first frame frequency in order to construct therefrom a second format (25fps) picture sequence the frame frequency of which is constant and is greater than said first frame frequency, said apparatus including means (CTRL, VDEC, ADEC) that are adapted for determining locations of fields or frames in said first format picture sequence at which locations the insertion of a corresponding additional field or frame causes a minimum visible motion judder (MJT) in said second format picture sequence,
and for inserting in said first format picture sequence a field or a frame at some of said locations at non-regular field or frame insertion distances (FRD) such that in total the average distance between any adjacent frames corresponds to that of said second format picture sequence, and for presenting said first format picture sequence together with said non-regularly inserted fields and/or frames in the format of said second format picture sequence,
**characterised in that** by said means a maximum amount of presentation delay ($VD_{max}$, $VD_{min}$) of the video track relative to the audio track is determined and said field or frame insertion locations in said first format picture sequence are controlled such that, in order to gain perceived lip-sync, in said second format picture sequence a smaller maximum amount of presentation delay ($VD_{maxLip-Sync}$ , $VD_{minLipSync}$) of the video track relative to the audio track caused by the insertion irregularity is used in case the following conditions are met:

- a slowly moving or static scene is detected, and
- speech or short sound peaks are detected in the audio information assigned to said first format picture sequence.

3. Apparatus according to claim 2, said apparatus being an optical disc player or an optical disc recorder, or a harddisk recorder, e.g. an HDD recorder or a PC, or a settop box, or a TV receiver.

4. Apparatus according to claim 2 or 3, said apparatus being an optical disc player or an optical disc recorder or a harddisk recorder or a settop box, wherein said apparatus outputs either the original first format (24p) picture sequence or said second format (25fps) picture sequence, which choice is controlled by replay mode information received either automatically from an interface (IF) that is connected to a device including a display device, or is received from a user interface (UI).

5. Method according to claim 1, or apparatus according to one of claims 2 to 4, wherein speech in the audio information assigned to said first format picture sequence is detected by evaluating, in multi-channel audio, whether the centre channel relative to left and right channels shows a bursty energy distribution over time that is significantly different from the energy distribution in the left and right channels.

6. Method according to claim 1 or 5, or apparatus according to one of claims 2 to 5, wherein said first format (24p) picture sequence is stored or recorded on a storage medium (D), e.g. an optical disc or a harddisk, or is broadcast or transferred as a digital TV signal.

7. Method according to one of claims 1, 5 and 6, or apparatus according to one of claims 2 to 6, wherein said field or frame insertion locations in said first format picture sequence are frames or fields that do not contain large moving picture content areas, the motion being determined by evaluating motion vectors.

8. Method according to one of claims 1 and 5 to 7, or apparatus according to one of claims 2 to 7, wherein said field or frame insertion locations in said first format picture sequence are frames or fields at which scene changes or a fade-to-black or a fade-to-white or a fade to any colour occurs.

9. Method according to one of claims 1 and 5 to 8, or apparatus according to one of claims 2 to 8, wherein the inserted fields or frames are motion compensated before being output in said second format picture sequence.

10. Method according to one of claims 1 and 5 to 9, or apparatus according to one of claims 2 to 9, wherein said first format picture sequence is an MPEG-2 picture sequence and wherein said inserting (CTRL, VDEC) of fields or frames in said first format picture sequence is controlled by evaluating flags either for indicating temporal order of fields or for indicating repetition of the first field for display, which flags are conveyed in said first format picture sequence in a user data field for each picture.

11. Method according to one of claims 1 and 5 to 10, or apparatus according to one of claims 2 to 10, wherein said first frame frequency is 24Hz and the frame frequency of said second format picture sequence is 25Hz.

12. Method according to claim 1, wherein flags signalling locations for fields or frames to be repeated or interpolated are conveyed in a user data field of said first format (24p) picture sequence.

**Patentansprüche**

1. Verfahren zur Steuerung (CTRL, VEDC) der Einfügung von zusätzlichen Halbbildern oder Vollbildern in eine Bildsequenz mit einem ersten Format (24p), die eine erste Vollbildfrequenz hat, um daraus eine Bildsequenz mit einem zweiten Format (24fps) aufzubauen, deren Vollbildfrequenz konstant und größer als die erste Vollbildfrequenz ist, wobei das Verfahren die Schritte einschließt:

- Bestimmen (CTRL, VDEC, ADEC) von Orten von Halbbildern oder Vollbildern in der Bildsequenz mit dem ersten Format, bei denen die Einfügung eines entsprechenden Halbbildes oder Vollbildes minimale Bewegungsunregelmäßigkeiten (MJT) in der Bildsequenz mit dem zweiten Format verursacht;
- Einfügen (CTRL, VDEC) eines Halbbildes oder eines Vollbildes in die Bildsequenz mit dem ersten Format an einigen der Orte mit ungleichmäßigen Halbbild- oder Vollbild-Einfügungsabständen (FRD), so dass insgesamt der durchschnittliche Abstand zwischen allen benachbarten Vollbildern dem der Bildsequenz mit dem zweiten Format entspricht;
- Darstellen der Bildsequenz mit dem ersten Format zusammen mit den nicht regelmäßig eingefügten Halbbildern und/oder Vollbildern in dem Format der Bildsequenz mit dem zweiten Format,
**dadurch gekennzeichnet, dass** ein maximales Maß an Darstellungsverzögerung ($VD_{max}$, $VD_{min}$) der Videospur relativ zu der Audiospur bestimmt wird, und dass die Halbbild- oder Vollbild-Einfügungsorte in der Bildsequenz mit dem ersten Format so gesteuert werden, dass zur Erzielung von wahrnehmbarer Lippensynchronisierung in der Bildsequenz mit dem zweiten Format ein kleineres maximales Maß an Darstellungsverzögerung ($VD_{maxLipSync}$, $VD_{minLipSync}$) der Videospur relativ zu der Audiospur, die durch die Einfügungs-Unregelmäßigkeit verursacht wird, für den Fall verwendet wird, dass die folgenden Bedingungen erfüllt werden:
- es wird eine sich langsam bewegende oder statische Szene festgestellt, und
- es werden in der der Bildsequenz mit dem ersten Format zugeordneten Audio-Information Sprache oder kurze Schallspitzen festgestellt.

**2.** Vorrichtung zur Steuerung (CRTL, VDEC) der Einfügung von zusätzlichen Halbbildern oder Vollbildern in eine Bildsequenz mit einem ersten Format (24p), die eine erste Vollbildfrequenz hat, um daraus eine Bildsequenz mit einem zweiten Format (25fps) aufzubauen, deren Vollbildfrequenz konstant und größer als die erste Vollbildsequenz ist, wobei die Vorrichtung Mittel (CTRL, VDEC, ADEC) enthält, um Orte von Halbbildern oder Vollbildern in der Bildsequenz mit dem ersten Format zu bestimmen, bei denen die Einfügung eines entsprechenden Halbbildes oder Vollbildes minimale sichtbare Bewegungsungleichmäßigkeiten (MJT) in der Bildsequenz mit dem zweiten Format verursacht,
und um in die Bildfrequenz mit dem ersten Format ein Halbbild oder ein Vollbild an einigen der Orte mit ungleichmäßigen Halbbild- oder Vollbild-Einfügungsabständen (FRD) einzufügen, so dass insgesamt der durchschnittliche Abstand zwischen allen benachbarten Vollbildern dem der Bildsequenz mit dem zweiten Format entspricht, und um die Bildsequenz mit dem ersten Format zusammen mit den nicht regelmäßig eingefügten Halbbildern und/oder Vollbildern in dem Format der Bildsequenz mit dem zweiten Format darzustellen,
**dadurch gekennzeichnet, dass** von den Mitteln ein maximales Maß an Darstellungsverzögerung ($VD_{max}$, $VD_{min}$) der Videospur relativ zu der Audiospur bestimmt wird und die Halbbild- oder Vollbild-Einfügungsorte in der Bildsequenz mit dem ersten Format so gesteuert werden, dass zur Erzielung von wahrnehmbarer Lippensynchronisierung in der Bildfrequenz mit dem zweiten Format ein kleineres maximales Maß an Darstellungsverzögerung ($VD_{maxLipSync}$, $VD_{minLipSync}$) der Videospur relativ zu der Audiospur, die durch die Einfügungs-Unregelmäßigkeit verursacht wird, für den Fall verwendet wird, dass die folgenden Bedingungen erfüllt werden:

- es wird eine sich langsam bewegende oder statische Szene festgestellt, und
- es werden in der der ersten Bildsequenz mit dem ersten Format zugeordneten Audio-Information Sprache oder kurze Schallspitzen festgestellt.

**3.** Vorrichtung nach Anspruch 2, wobei diese ein Abspiel- oder ein Aufzeichnungsgerät für optische Disks, oder ein Festplatten-Aufzeichnungsgerät, z.B. ein HDD-Recorder oder ein PC oder eine Set-Top-Box oder ein Fernsehempfänger ist.

**4.** Vorrichtung nach Anspruch 2 oder 3, wobei diese ein Abspiel-oder ein Aufzeichnungsgerät für optische Disks, oder ein Festplatten-Aufzeichnungsgerät oder eine Set-Top-Box ist, wobei die Vorrichtung entweder die ursprüngliche Bildsequenz mit dem ersten Format (24p) oder die Bildsequenz mit dem zweiten Format (25fps) ausgibt, wobei die Wahl durch Wiedergabebetriebs-Informationen gesteuert wird, die entweder automatisch von einer Schnittstelle (IF) empfangen werden, die mit einer Vorrichtung verbunden ist, die eine Anzeigevorrichtung enthält, oder die von einer Benutzer-Schnittstelle (UI) empfangen wird.

**5.** Verfahren nach Anspruch 1 oder Vorrichtung nach einem der Ansprüche 2 bis 4, bei dem bzw. bei der Sprache in der der Bildsequenz mit dem ersten Format zugeordneten Audio-Information bei Multikanal-Audio durch Auswertung festgestellt wird, ob der mittlere Kanal relativ zu linken und rechten Kanälen eine burstartige Energieverteilung über der Zeit zeigt, die sich wesentlich von der Energieverteilung in den linken und rechten Kanälen unterscheidet.

**6.** Verfahren nach Anspruch 1 oder 5 oder Vorrichtung nach einem der Ansprüche 2 bis 5, bei dem bzw. bei der die Bildsequenz mit dem ersten Format (24p) auf einem Aufzeichnungsmedium (D), z.B. einer optischen Disk oder einer Festplatte gespeichert oder auf dieser aufgezeichnet wird, oder gesendet oder als digitales Fernsehsignal übertragen wird.

**7.** Verfahren nach einem der Ansprüche 1, 5 und 6 oder Vorrichtung nach einem der Ansprüche 2 bis 6, bei dem bzw.

bei der die Halbbild- oder Vollbild-Einfügungsorte in der Bildsequenz mit dem ersten Format Vollbilder oder Halbbilder sind, die keine sich bewegende große Bildinhaltsbereiche enthalten, wobei die Bewegung durch Auswertung von Bewegungsvektoren bestimmt wird.

**8.** Verfahren nach einem der Ansprüche 1 und 5 bis 7 oder Vorrichtung nach einem der Ansprüche 2 bis 7, bei dem bzw. bei der die Halbbild- oder Vollbild-Einfügungsorte in der Bildsequenz mit dem ersten Format Vollbilder oder Halbbilder sind, bei denen Szenenwechsel oder ein Überblenden auf Schwarz oder ein Überblenden auf Weiß oder ein Überblenden auf irgendeine Farbe auftreten.

**9.** Verfahren nach einem der Ansprüche 1 und 5 bis 8 oder Vorrichtung nach einem der Ansprüche 2 bis 8, bei dem bzw. bei der die eingefügten Halbbilder oder Vollbilder vor Ausgabe in die Bildsequenz mit dem zweiten Format bewegungskompensiert werden.

**10.** Verfahren nach einem der Ansprüche 1 und 5 bis 9 oder Vorrichtung nach einem der Ansprüche 2 bis 9, bei dem bzw. bei der die Bildsequenz mit dem ersten Format eine MPEG-2-Bildsequenz ist, und wobei das Einfügen (CTRL, VDEC) von Halbbildern oder Vollbildern in die Bildsequenz mit dem ersten Format durch Auswerten von Kennzeichen entweder zur Anzeige einer zeitlichen Reihenfolge von Halbbildern oder zur Anzeige einer Wiederholung des ersten Halbbildes für eine Anzeige gesteuert wird, wobei die Kennzeichen in der Bildsequenz mit dem ersten Format in ein Benutzer-Datenfeld für jedes Bild befördert werden.

**11.** Verfahren nach einem der Ansprüche 1 und 5 bis 10 oder Vorrichtung nach einem der Ansprüche 2 bis 10, bei dem bzw. bei der die erste Vollbildfrequenz 24 Hz und die Vollbildfrequenz der Bildsequenz mit dem zweiten Format 25 Hz ist.

**12.** Verfahren nach Anspruch 1, bei der Kennzeichen, die Orte für zu wiederholende oder zu interpolierende Halbbilder oder Vollbilder signalisieren, in ein Benutzer-Datenfeld der ersten Bildsequenz mit dem ersten Format (24p) befördert werden.

## Revendications

**1.** Procédé permettant de commander (CTRL, VDEC) l'insertion de trames ou d'images additionnelles dans une séquence d'images d'un premier format (24p) ayant une première fréquence image, afin de construire à partir de celle-ci une séquence d'images d'un second format (25fps) dont la fréquence image est constante et supérieure à ladite première fréquence image, ledit procédé comprenant les étapes consistant à :

- déterminer (CTRL, VDEC, ADEC) des emplacements de trames ou d'images dans ladite séquence d'images au premier format, auxquels emplacements l'insertion d'une trame ou d'une image additionnelle correspondante provoque un tremblement de mouvement visible (MJT) minimum dans ladite séquence d'images au second format ;
- insérer (CTRL, VDEC) dans la dite séquence d'images au premier format une trame ou une image à certains desdits emplacements à des distances d'insertion de trame ou d'image (FRD) non régulières de sorte qu'au total la distance moyenne entre n'importe quelle image adjacente corresponde à celle de ladite séquence d'images au second format ;
- présenter ladite séquence d'images au premier format avec lesdites trames et/ou images insérées de manière non régulière au format de ladite séquence d'images au second format,

**caractérisé en ce qu'**une valeur maximum de retard de présentation ($VD_{max}$, $VD_{min}$) de la piste vidéo par rapport à la piste audio est déterminée et **en ce que** lesdits emplacements d'insertion de trame ou d'image dans ladite séquence d'images au premier format sont commandés de sorte que, afin de gagner de manière perceptible en synchronisation labiale, dans ladite séquence d'images au second format, une valeur maximum inférieure de retard de présentation ($VD_{maxSynchLabiale}$, $VD_{minSynchLabiale}$) de la piste vidéo par rapport à la piste audio provoqué par l'irrégularité d'insertion est utilisée lorsque les conditions suivantes sont réunie :
- une scène statique ou à mouvement lent est détectée, et
- des paroles ou des pics de sons brefs sont détectés dans les informations audio associées à ladite séquence d'images au premier format.

**2.** Appareil permettant de commander (CTRL, VDEC) l'insertion de trames ou d'images additionnelles dans une séquence d'images d'un premier format (24p) ayant une première fréquence image, afin de construire à partir de celle-ci une séquence d'images d'un second format (25fps) dont la fréquence image est constante et supérieure à ladite première fréquence image, ledit appareil comprenant des moyens (CTRL, VDEC, ADEC) qui sont adaptés pour déterminer des emplacements de trames ou d'images dans ladite séquence d'images au premier format, auxquels emplacements l'insertion d'une trame ou d'une image additionnelle correspondante provoque un tremblement de mouvement visible (MJT) minimum dans ladite séquence d'images au second format,
et permettant d'insérer dans la dite séquence d'images au premier format une trame ou une image à certains desdits emplacements à des distances d'insertion de trame ou d'image (FRD) non régulières de sorte qu'au total la distance moyenne entre n'importe quelle image adjacente correspond à celle de ladite séquence d'images au second format,
et permettant de présenter ladite séquence d'images au premier format avec lesdites trames et/ou images insérées de manière non régulière au format de ladite séquence d'images au second format,
**caractérisé en ce que**, par le biais desdits moyens, une valeur maximum de retard de présentation ($VD_{max}$, $VD_{min}$) de la piste vidéo par rapport à la piste audio est déterminée et lesdits emplacements d'insertion de trame ou d'image dans ladite séquence d'images au premier format sont commandés de sorte que, afin de gagner de manière perceptible en synchronisation labiale, dans ladite séquence d'images au second format, une valeur maximum inférieure de retard de présentation ($VD_{maxSynchLabiale}$, $VD_{minSynchLabiale}$) de la piste vidéo par rapport à la piste audio provoqué par l'irrégularité d'insertion est utilisée lorsque les conditions suivantes sont réunies :

- une scène statique ou à mouvement lent est détectée, et
- des paroles ou des pics de sons brefs sont détectés dans les informations audio associées à ladite séquence d'images au premier format.

**3.** Appareil selon la revendication 2, ledit appareil étant un lecteur de disque optique ou un graveur de disque optique, ou un enregistreur de disque dur, par ex. un enregistreur HDD ou un PC, ou un boîtier décodeur, ou un téléviseur.

**4.** Appareil selon la revendication 2 ou 3, ledit appareil étant un lecteur de disque optique ou un graveur de disque optique ou un enregistreur de disque dur ou un boîtier décodeur, où ledit appareil émet soit la séquence d'images initiale au premier format (24p), soit ladite séquence d'images au second format (25fps), lequel choix est commandé par des informations de mode de retransmission reçues soit automatiquement d'une interface (IF) connectée à un dispositif comprenant un dispositif d'affichage, soit reçues d'une interface utilisateur (IU).

**5.** Procédé selon la revendication 1, ou appareil selon l'une des revendications 2 à 4, dans lequel les paroles dans les informations audio associées à ladite séquence d'images au premier format sont détectées en évaluant, dans un audio à canaux multiples, si le canal central par rapport aux canaux gauche et droit présente une distribution d'énergie par salve dans le temps considérablement différente de la distribution d'énergie dans les canaux gauche et droit.

**6.** Procédé selon la revendication 1 ou 5, ou appareil selon une des revendications 2 à 5, dans lequel ladite séquence d'images au premier format (24p) est stockée ou enregistrée sur un support de stockage (D), par ex. un disque optique ou un disque dur, ou est diffusée ou transférée comme un signal TV numérique.

**7.** Procédé selon une des revendications 1, 5 et 6, ou appareil selon une des revendications 2 à 6, dans lequel lesdits emplacements d'insertion de trame ou d'image dans ladite séquence d'images au premier format sont des images ou des trames qui ne contiennent pas de zones de contenu d'image à mouvement important, le mouvement étant déterminé en évaluant des vecteurs de mouvement.

**8.** Procédé selon une des revendications 1 et 5 à 7, ou appareil selon une des revendications 2 à 7, dans lequel lesdits emplacements d'insertion de trame ou d'image dans ladite séquence d'images au premier format sont des images ou des trames dans lesquels un changement de scène ou une gradation vers le noir ou une gradation vers le blanc ou une gradation vers n'importe quelle couleur se produit.

**9.** Procédé selon une des revendications 1 et 5 à 8, ou appareil selon une des revendications 2 à 8, dans lequel des trames ou des images insérées sont compensées en mouvement avant d'être émises dans ladite séquence d'images au second format.

**10.** Procédé selon une des revendications 1 et 5 à 9, ou appareil selon une des revendications 2 à 9, dans lequel ladite séquence d'images au premier format est une séquence d'images MPEG-2 et dans lequel ladite insertion de trames ou d'images dans ladite séquence d'images au premier format est commandée en évaluant des indicateurs permettant soit d'indiquer une ordre temporel de trames, soit d'indiquer une répétition de la première trame pour affichage, lesquels indicateurs sont véhiculés dans ladite séquence d'images au premier format dans une trame de données utilisateur pour chaque image.

11. Procédé selon une des revendications 1 et 5 à 10, ou appareil selon une des revendications 2 à 10, dans lequel ladite première fréquence image est de 24Hz et la fréquence image de ladite séquence d'images au second format est de 25Hz.

12. Procédé selon la revendication 1, dans lequel les indicateurs signalant des emplacements pour des trames ou des images à répéter ou à interpoler sont véhiculés dans une trame de données utilisateur de ladite séquence d'images au premier format (24p).

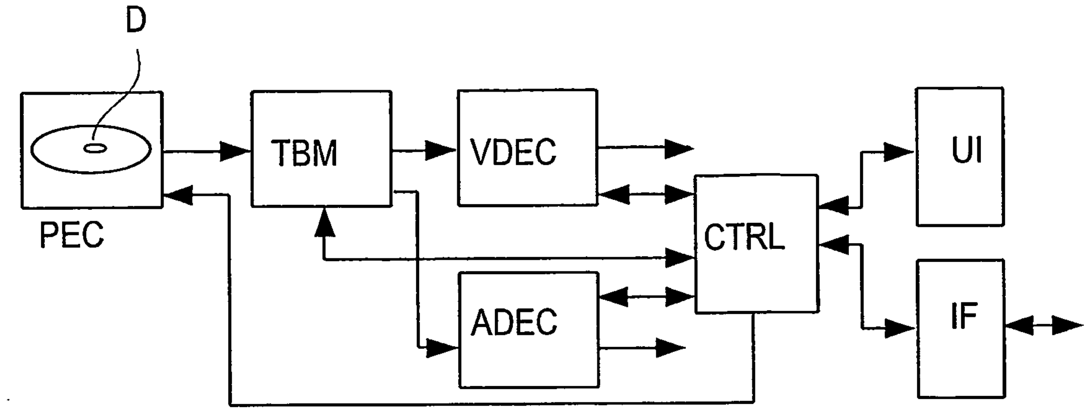
D
PEC
TBM
VDEC
ADEC
CTRL
UI
IF

Fig.1

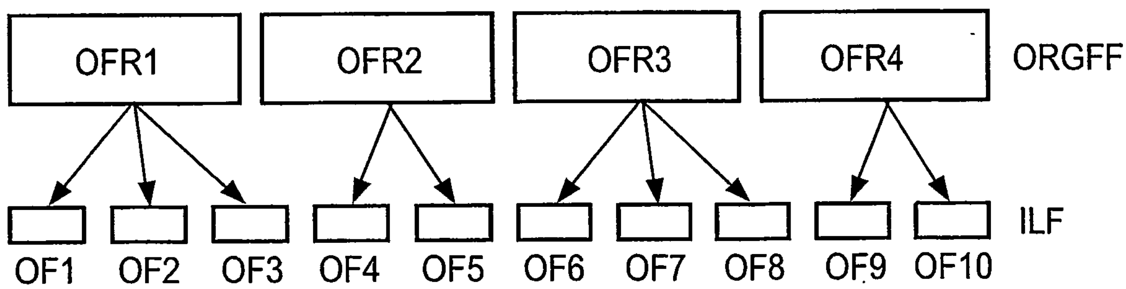
OFR1
OFR2
OFR3
OFR4
ORGFF
ILF
OF1
OF2
OF3
OF4
OF5
OF6
OF7
OF8
OF9
OF10

Fig.2

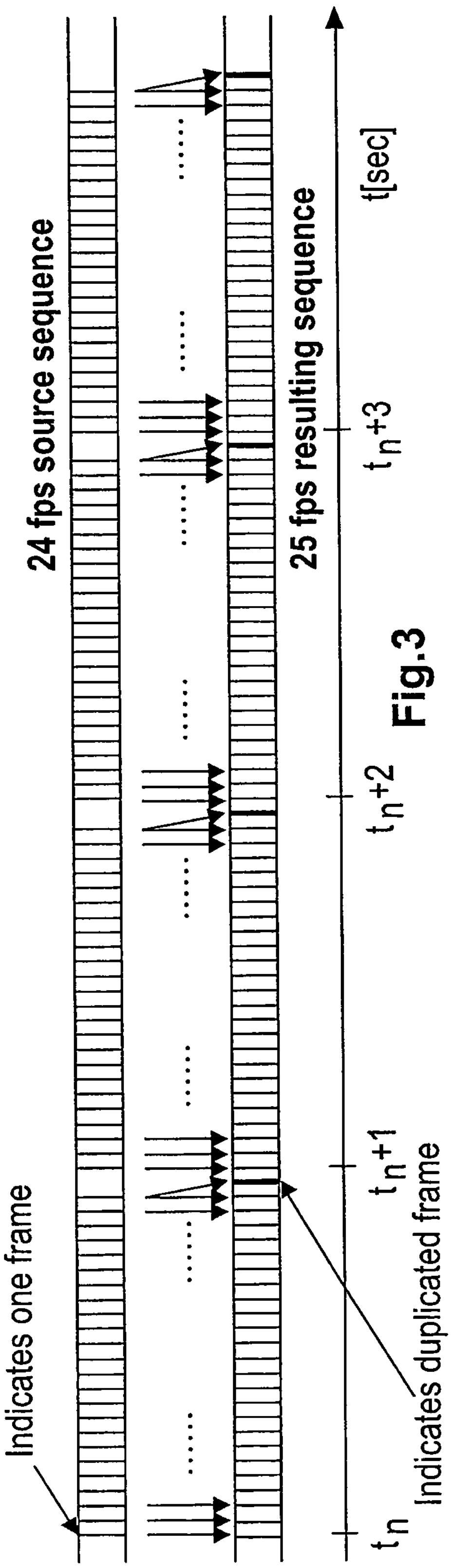


Fig.3

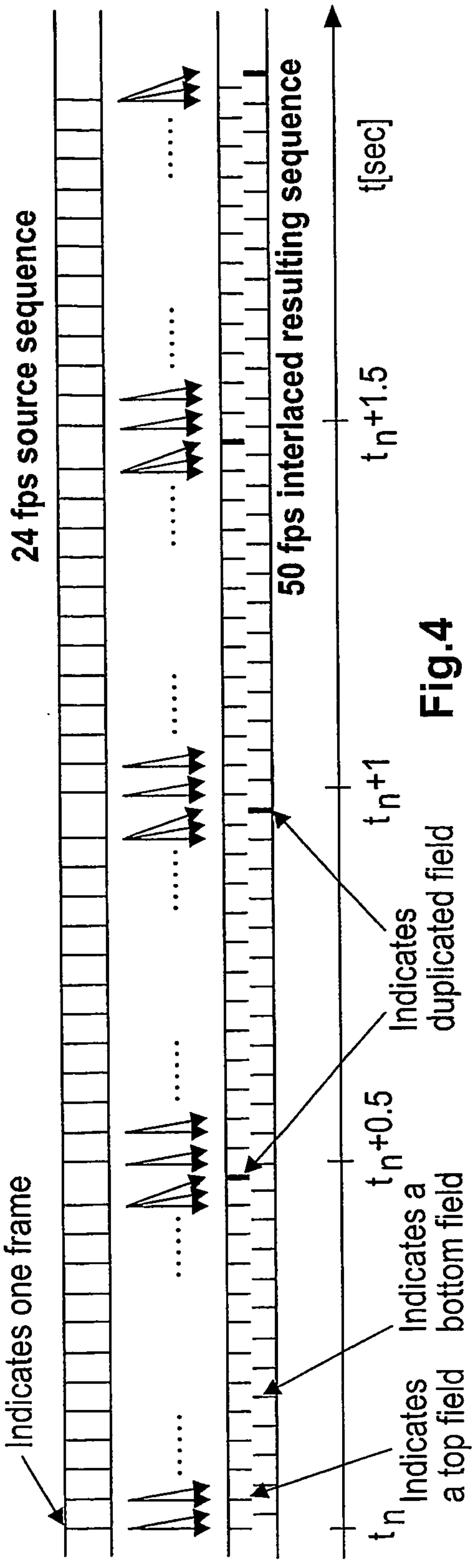


Fig.4

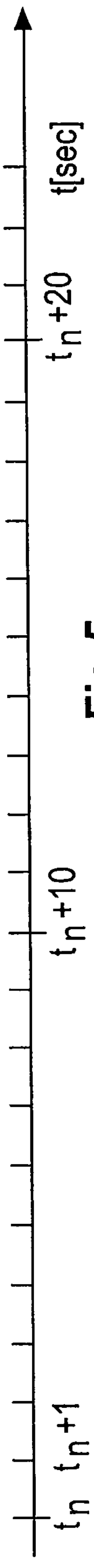


Fig.5

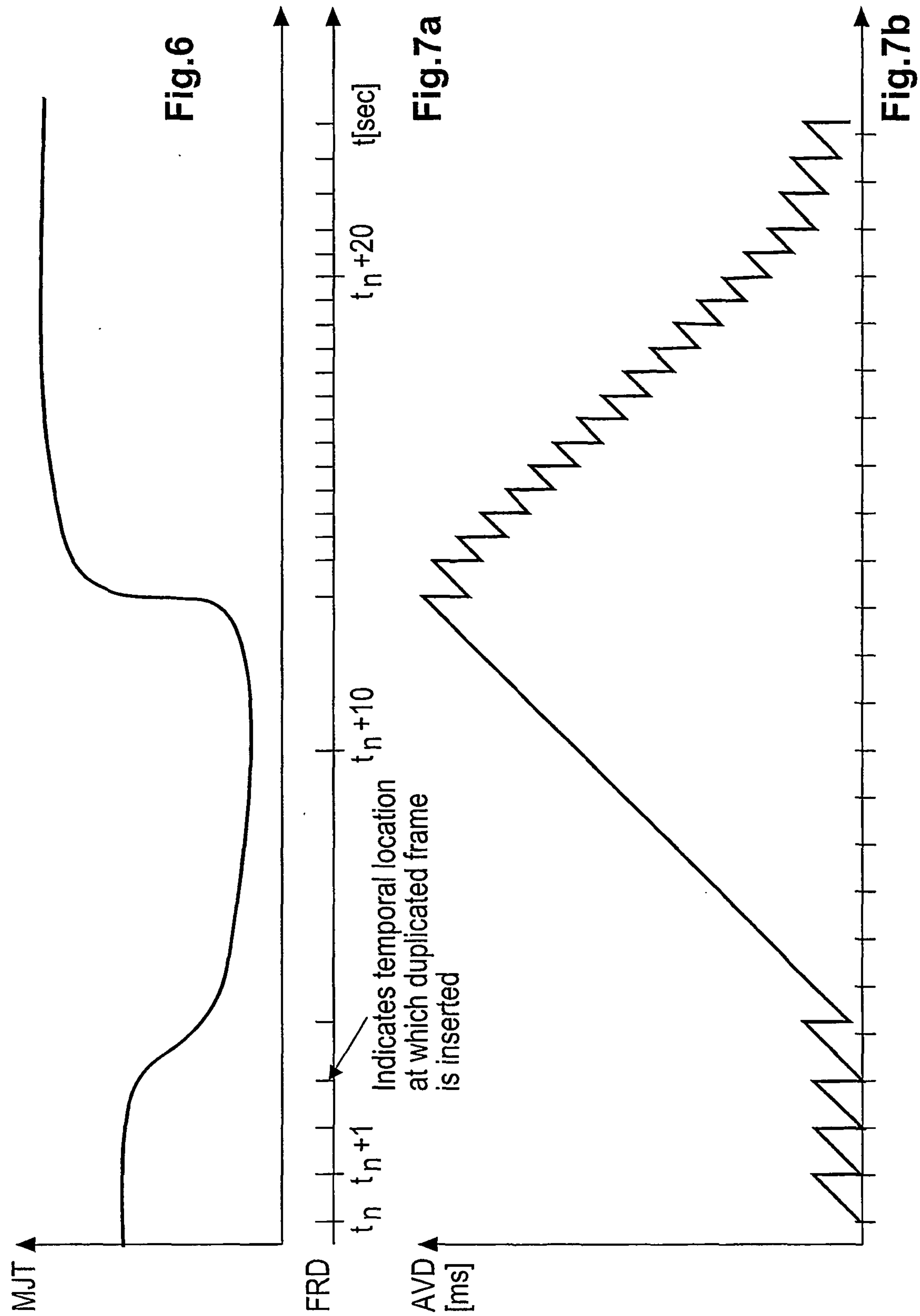


Fig.6

Fig.7a

Fig.7b

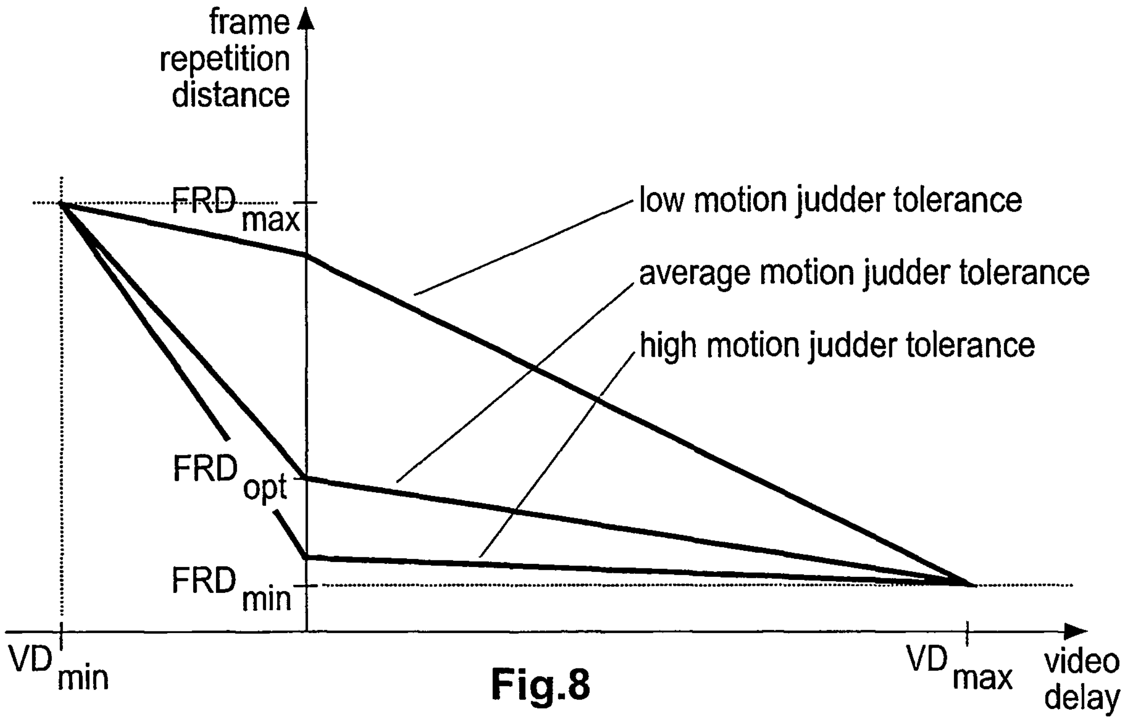
frame repetition distance
FRD max
low motion judder tolerance
average motion judder tolerance
high motion judder tolerance
FRD opt
FRD min
VD min
VD max
video delay

Fig.8

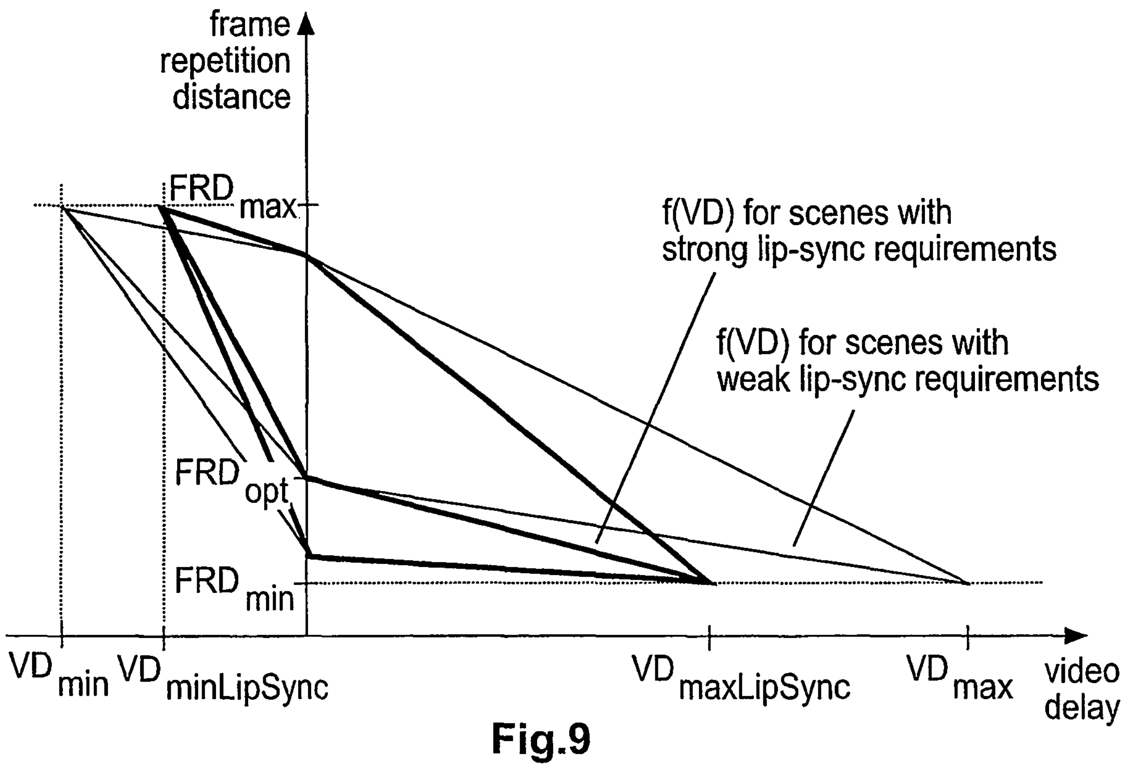
frame repetition distance
FRD max
f(VD) for scenes with strong lip-sync requirements
f(VD) for scenes with weak lip-sync requirements
FRD opt
FRD min
VD min
VD minLipSync
VD maxLipSync
VD max
video delay

Fig.9

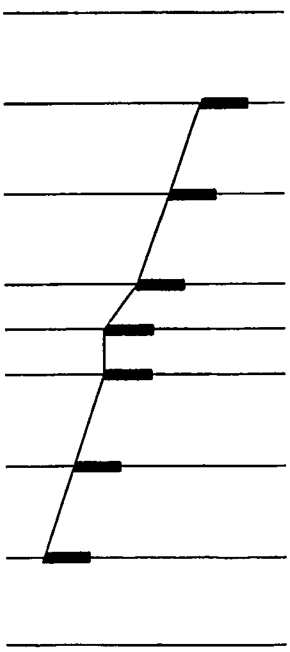

Fig.10

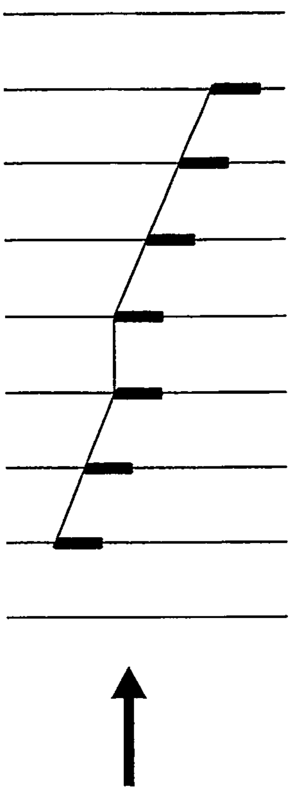

Fig.11

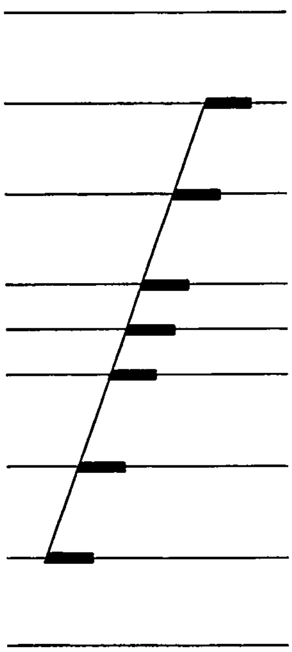

Fig.12

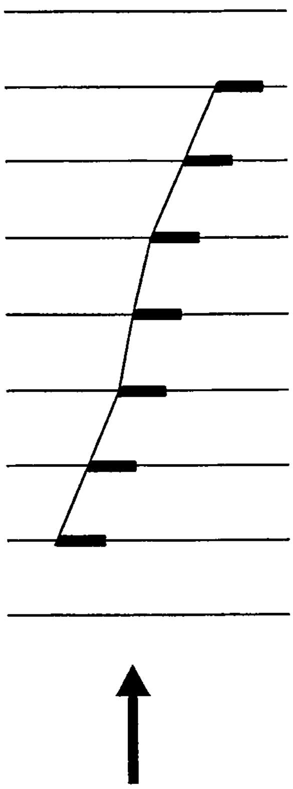

Fig.13

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 9952281 A